# EUROPÄISCHE PATENTANMELDUNG

(11) **EP 0 801 491 A2**
(43) Veröffentlichungstag der Anmeldung: **15.10.1997**
(21) Anmeldenummer: 97105856.5
(22) Anmeldetag: 09.04.1997
(51) Int. Cl.: H04M 11/06

(54) **Vorrichtung zur Datenfernübertragung zwischen einem beweglichen Datenträger und einer Zentrale**

(30) Priorität: 12.04.1996 DE 19614556
(71) Anmelder: Lerchner, Leonhard, 5020 Salzburg (AT); Hainzlmaier, Hermann, 85290 Geisenfeld (DE)
(72) Erfinder: Lerchner, Leonhard, 5020 Salzburg (AT); Hainzlmaier, Hermann, 85290 Geisenfeld (DE)
(74) Vertreter: Haft, von Puttkamer, Berngruber, Czybulka

(57) **Zusammenfassung**

Zur Datenfernübertragung zwischen einem personen- oder objektgebundenen beweglichen programmierbaren Datenträger (1) und einer Zentrale über ein Signal- und/oder Datenübertragungsnetz mit einem Modem (8) ist eine Vorrichtung mit einer Steuereinheit (4) zum Ansteuern des Modems (8) und einer Hochfrequenz-Lese- und Sendeeinrichtung (2) zur berührungslosen Übertragung von Daten zu und von dem mit einem Transponder versehenen Datenträger (1) vorgesehen.

## Beschreibung

Die Erfindung bezieht sich auf eine Vorrichtung zur Datenfernübertragung zwischen einem personengebundenen oder objektgebundenen beweglichen programmierbaren Datenträger und einer Zentrale über ein Signal- oder Datenübertragungsnetz, insbesondere das Telefonnetz nach dem Oberbegriff des Anspruchs 1. Sie hat auch Verwendungen dieser Vorrichtung zum Gegenstand.

Aus DE 31 37 024 A1 ist eine derartige Vorrichtung bereits bekannt. Sie dient zur Erfassung des Standortes von Personen über das Telefonnetz. Dazu ist der Datenträger in einem Kennungsgeber vorgesehen, der eine Solarzelle oder dgl. Energievorrichtung, einen Zufallsgenerator und eine Reihe weiterer Einrichtungen enthält, um ständig programmierte Kennungssignale auszusenden, die von Leseeinrichtungen empfangen werden, die in Telefonapparaten des Telefonnetzes installiert sind. Die Programmierung erfolgt mit einer separaten Programmiereinrichtung entweder bei der Fertigung oder durch Wartungspersonal.

Aus DIALOG 2/91, S. 31, 33 ist ein Datenträger mit Energieversorgung in einer Armbanduhr bekannt, der z.B. mit einer Schreibeinrichtung mit einer Zugangsberechtigung geladen und dann am Zugang von einer Leseeinrichtung gelesen werden kann.

Nach US-A 5,241,161 wird bei einer ähnlichen Armbanduhr moduliertes Licht zur Datenübertragung von einer Lichtquelle zu einem Fotodetektor in der Armbanduhr bzw. von einem LCD in der Armbanduhr zu einem Fotodetektor verwendet.

Aufgabe der Erfindung ist es, bei erheblich geringerem apparativen Aufwand und erhöhter Sicherheit das Spektrum der Einsatzmöglichkeit der eingangs genannten Vorrichtung wesentlich zu erweitern.

Dies wird erfindungsgemäß mit der im Anspruch 1 gekennzeichneten Vorrichtung erreicht. In den Ansprüchen 2 und 3 sind vorteilhafte Ausgestaltungen der Erfindung wiedergegeben. Die Ansprüche 4 bis 6 beziehen sich auf vorteilhafte Verwendungsmöglichkeiten der erfindungsgemäßen Vorrichtung.

Nach der Erfindung kann beispielsweise ein wertvolles bewegbares Objekt mit einem objektgebundenen Datenträger versehen und damit über weite Strecken identifiziert werden. Dazu werden die digital aufgezeichneten Daten des Datenträgers von der Leseeinrichtung der erfindungsgemäßen Vorrichtung berührungslos abgelesen und über die Steuereinheit einem Modem oder einem Akustikkoppler zugeführt, das bzw. der die von dem Datenträger abgelesenen digitalen Daten in Tonfrequenzen moduliert, so dass sie über das Telefonnetz an die Zentrale übertragbar sind. Die auf den Datenträger aufgezeichneten personen- und objektgebundenen Daten sind so beschaffen, dass sie eine einwandfreie Identifizierung der betreffenden Person oder des betreffenden Gegenstandes ermöglichen. Auf diese Weise ist eine einfache Fernidentifizierung von Personen und Objekten möglich.

Nach der Erfindung ist der Datenträger programmierbar ausgebildet, und die Steuereinheit neben der Leseeinrichtung mit einer Sendeeinrichtung zum berührungslosen Einschreiben von Daten auf dem Datenträger versehen. Damit kann beispielsweise über das Telefon eine Berechtigung, eine Leistungsinanspruchnahme oder dgl. auf den Datenträger geladen werden.

Ferner kann die erfindungsgemäße Vorrichtung dazu genutzt werden, um den Aufenthalt von Personen oder Objekten, einschließlich Tieren zu überwachen. Dazu sind Kontrollstationen vorgesehen, die eine Sendeeinrichtung zum berührungslosen Einschreiben von Daten auf den Datenträger umfassen, wenn sie passiert werden. Das Passieren der Kontrollstation wird in den Datenträger eingeschrieben und kann dann mit der erfindungsgemäßen Vorrichtung von der Zentrale aus überprüft werden.

Zur berührungslosen Zugangskontrolle wird am Zugang einer Tür eine Leseeinrichtung angeordnet, die die Daten von einem Datenträger abliest, den die betreffende Person trägt, die den Zugang passieren will. Falls die Ablesung der personenbezogenen Daten des Datenträgers eine Zugangsberechtigung ergibt, öffnet sich die Tür.

Mit der erfindungsgemäßen Vorrichtung besteht auch die Möglichkeit, dass eine Person mit dem personengebundenen Datenträger sich über das Telefonnetz bei der Zentrale identifiziert, worauf von der Zentrale über das Telefonnetz beispielsweise eine vorübergehende Zugangsberechtigung in den Datenträger eingeschrieben wird.

Bei gesicherten Anlagen, wie Flughäfen, Kernkraftwerken, Fabriken oder dgl., kann damit an jedem Zugang zu den einzelnen Bereichen eine Leseeinrichtung vorgesehen sein, die den Datenträger der betreffenden Person, die den Zugang passieren will, abliest. Wenn die einzelnen Bereiche nur für bestimmte Personen zugänglich sein sollen, kann einer Person, die sonst keine Zugangsberechtigung hat, die Zugangsberechtigung zu diesem Bereich von der Zentrale über das Telefonnetz auf den Datenträger geschrieben werden.

Wenn an den Zugängen der Anlage jeweils eine Leseeinrichtung und eine Sendeeinrichtung vorgesehen ist, die erfindungsgemäß mit der Zentrale verbunden ist, so dass das Passieren der Person in den Datenträger eingeschrieben werden kann, kann von der Zentrale über das Telefonnetz festgestellt werden, welche Zugänge die betreffende Person in der Anlage passiert hat.

Angesichts der großen Zahl der Endgeräte des Telefonnetzes ist damit eine Fernübertragung der Daten zwischen dem personen- oder objektgebundenen Datenträger und der Zentrale von fast jedem Ort aus möglich. Falls die erfindungsgemäße Vorrichtung mit einem Modem ausgestattet ist, kann dieses an eine Telekommunikations- Anschlußeinheit- oder TAE-Steckdose des Telefonnetzes angeschlossen werden.

Nach einer bevorzugten Ausführungsform der Erfindung können das Modem oder der Akustikkoppler sowie die Leseeinrichtung und gegebenenfalls die Sendeeinrichtung mit der Steuereinheit in einen Handy-Telefonapparat integriert sein.

Bei personenbezogenen Datenträgern kann der Datenträger beispielsweise in eine Armbanduhr integriert sein.

Zur berührungslosen Datenübertragung zwischen der Leseeinrichtung und Sendeeinrichtung einerseits und dem personen- oder objektgebundenen Datenträger andererseits sind die Leseeinrichtung und Sendeeinrichtung als Hochfrequenz- Lese- oder Sendeeinrichtung, also RF-Lese- und Sendeeinrichtung ausgebildet und der Datenträger mit einem Transponder versehen. Das heißt, der Datenträger einerseits und die Lese- und Sendeeinrichtung andererseits weisen aufeinander abgestimmte elektrische Hochfrequenz-Schwingkreise (Radiofrequenz) auf. Bei Annäherung des Datenträgers an den Schwingkreis der Leseeinrichtung kommt es damit im Schwingkreis des Datenträgers zu einer Anregung und damit einer Energiezufuhr, die die Datenübertragung vom Datenträger zu der Leseeinrichtung ermöglicht. In gleicher Weise wird durch die aufeinander abgestimmten Schwingkreise des Datenträgers und der Sendeeinrichtung ein Beschreiben des Datenträgers durch die Sendeeinrichtung ermöglicht. Durch das Erfordernis der Abstimmung der Schwingkreise wird die Sicherheit der erfindungsgemäßen Vorrichtung erhöht. Durch den Transponder ist der Datenträger passiv, d.h., ohne eigene Energieversorgung ausgebildet. Er wird von dem Schwingkreis der Lese- und Sendeeinrichtung gezielt aktiviert und mit Energie versorgt. Bei der erfindungsgemäßen Vorrichtung sind also die Lese- und die Sendeeinrichtung zu einem Gerät mit nur einer Steuereinheit zusammengefasst. Die erfindungsgemäße Vorrichtung kommt daher mit einem geringen apparativen Aufwand aus. Auch ist das Lesen und Schreiben des Datenträgers weitgehend einer Manipulationsmöglichkeit entzogen, da die Datenübertragung über das Telefonnetz erfolgt, also die Eingabe der Daten nicht über eine Tastatur an der Sendeeinrichtung oder über ein Display an der Leseeinrichtung erfolgt.

Nachstehend sind zwei Ausführungsformen der erfindungsgemäßen Vorrichtung anhand der Zeichnung beispielsweise beschrieben. Darin zeigen jeweils schematisch:
- Figur 1: die Ansicht einer ersten Ausführungsform mit einem Akustikkoppler zwischen der Lese-/Sendeeinrichtung und dem Telefonnetz; und
- Figur 2: eine Ansicht einer weiteren Ausführungsform mit einem Modem zwischen der Lese-/Sendeeinrichtung und dem Telefonnetz.

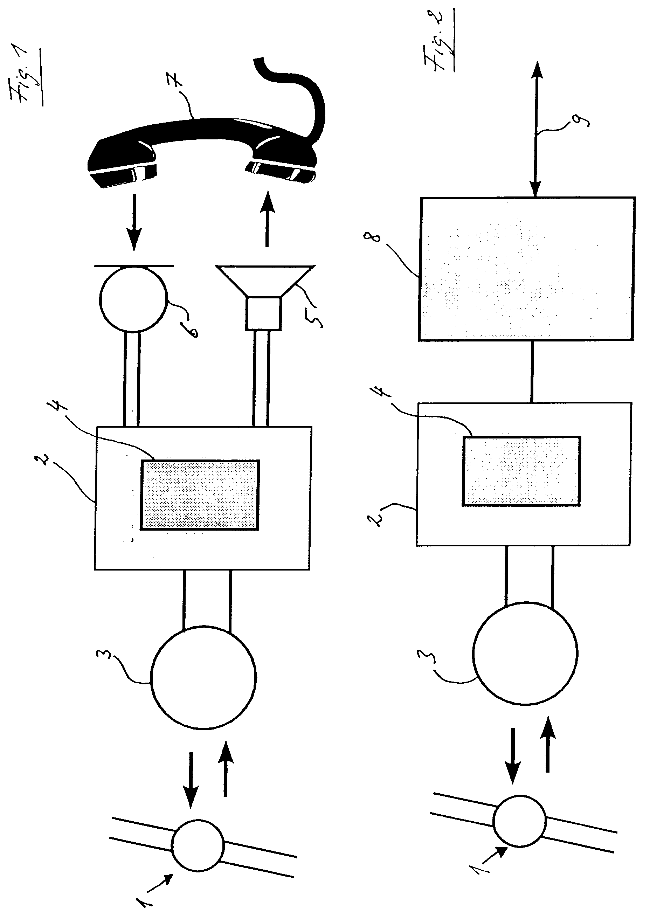

Gemäß Figur 1 ist ein programmierbarer Datenträger 1 (Chip) in einer Armbanduhr vorgesehen. Zur berührungslosen Datenübertragung ist eine RF-Lese- und Sendeeinrichtung 2 vorgesehen, die eine Antenne 3 und eine Steuereinheit 4 aufweist. Die Steuereinheit 4 steuert einen Akustikkoppler mit einem Lautsprecher 5 und einem Mikrofon 6 an, die zur Tonübertragung an einen mit dem Telefonnetz verbundenen Telefonhörer 7 angeschlossen sind. Durch den Akustikkoppler werden die digitalen Daten, die von der RF-Lese- und Sendeeinrichtung 2 mit der Antenne 3 von dem Datenträger 1 gelesen werden in Tonfrequenzen moduliert, die über den Lautsprecher 5 und den Telefonhörer 7 dem Telefonnetz und damit einer Zentrale zugeführt werden. Andererseits werden zum Einschreiben von Daten in den Datenträger 1 von der Zenrale Daten in Form von Tonfrequenzen über das Telefonnetz dem Telefonhörer 7 und dem Mikrofon 6 zugeführt, die dann von der RF-Lese- und Sendeeinrichtung 2 über die Antenne 3 berührungslos dem Datenträger 1 zugeführt werden.

Die Ausführungsform nach Figur 2 unterscheidet sich von derjenigen nach Figur 1 im wesentlichen dadurch, dass statt dem Akustikkoppler mit dem Lautsprecher 5 und dem Mikrofon 6 ein Modem 8 vorgesehen ist, das, wie durch den Pfeil 9 angedeutet, beispielsweise über eine TAE-Steckdose an das Telefonnetz und damit an die Zentrale anschließbar ist.

## Patentansprüche

1. Vorrichtung zur Datenfernübertragung zwischen einem personen- oder objektgebundenen beweglichen programmierbaren Datenträger und einer Zentrale über ein Signal- und/oder Datenübertragungsnetz, mit einer Steuereinheit, die eine Leseeinrichtung zur berührungslosen Datenübertragung umfaßt, dadurch gekennzeichnet, dass das Signal- und/oder Datenübertragungsnetz von der Steuereinheit (4) mit einem Modem (8) oder Akustikkoppler angesteuert wird, die Steuereinheit (4) neben der Leseeinrichtung eine Sendeeinrichtung zum berührungslosen Einschreiben von Daten auf den Datenträger (1) umfaßt, die Lese- und die Sendeeinrichtung eine Hochfrequenz-Lese- und Sendeeinrichtung (2) ist und der Datenträger (1) einen Transponder aufweist.

2. Vorrichtung nach Anspruch 1, dadurch gekennzeichnet, dass das Modem (8) oder der Akustikkoppler, die Leseeinrichtung und die Sendeeinrichtung mit der Steuereinheit (4) in einen Handy-Telefonapparat integriert sind.

3. Vorrichtung nach einem der vorstehenden Ansprüche, dadurch gekennzeichnet, dass der Datenträger (1) in eine Armbanduhr integriert ist.

4. Verwendung der Vorrichtung nach einem der Ansprüche 1 bis 3 zur Überwachung des Aufenthaltes von Personen und beweglichen Objekten, wobei Kontrollstationen vorgesehen sind, die eine Sendeeinrichtung zum berührungslosen Einschreiben von Daten auf den Datenträger (1) umfassen, wenn sie passiert werden.

5. Verwendung der Vorrichtung nach einem der vorstehenden Ansprüche zur Zugangskontrolle, wobei an dem Zugang eine Leseeinrichtung angeordnet ist, die am Zugang angeordnete Leseeinrichtung die Daten von dem Datenträger (1) der betreffenden Person oder des betreffenden beweglichen Objekts liest und bei abgelesener Zugangsberechtigung den Zugang freigibt.

6. Verwendung nach Anspruch 5, wobei über die Leseeinrichtung der Vorrichtung eine Identifizierung der betreffenden Person oder des betreffenden beweglichen Objekts über das Signal- und/oder Datenübertragungsnetz in der Zentrale erfolgt, worauf von der Zentrale über das Signal- und/oder Datenübertragungsnetz mit der Sendeeinrichtung der Vorrichtung eine Zugangsberechtigung in den Datenträger (1) eingeschrieben wird.
